# EUROPEAN PATENT SPECIFICATION

(11) **EP 1 612 003 B1**
(45) Date of publication and mention of the grant of the patent: **11.06.2008**
(21) Application number: 05253209.0
(22) Date of filing: 25.05.2005
(51) Int. Cl.: B25G 1/04, B25G 3/10

(54) **Pipe handle and cleaning device using the same**
Rohrförmiger Stiel und diesen benützendes Reinigungsgerät
Poignée tubulaire et dispositif de nettoyage utilisant une telle poignée

(30) Priority: 28.06.2004 JP 2004190186
(43) Date of publication of application: 04.01.2006
(73) Proprietor: UNI-CHARM CORPORATION, Shikokuchuo-shi, Ehime 799-0111 (JP)
(72) Inventor: Suda, Tomokazu, Uni-Charm Corp. Tech. Center, Mitoyo-gun, Kagawa 769-1602 (JP); Fujiwara, Masatoshi, Uni-Charm Corp. Tech. Center, Mitoyo-gun, Kagawa 769-1602 (JP)
(74) Representative: Fitchett, Stuart Paul

(56) References cited:
- GB-A- 1 390 154
- US-A- 2 142 149
- US-A- 3 476 413
- US-A1- 2003 110 584
- US-A1- 2003 135 955

## Description

### Field of the Invention

The present invention relates to a pipe handle according to the preamble of claim 1 formed by coupling a plurality of pipes and to a cleaning device having the pipe handle and a head. Such a device is known from GB 1390154.

### Description of the Related Art

There have been known cleaning devices composed of a pipe handle and a head connected to one end of the pipe handle. Cleaning devices of this type are typically used with a disposable cleaning sheet (e.g., a wiper of nonwoven fabric) attached to the head. When used for cleaning the house floor or the like, the pipe handle need be so long that the head can slide on the floor surface with a grip (the other end of the pipe handle) being held by hand.

Japanese Unexamined Patent Publication Nos. 2002-005135 and 2002-081420 disclose pipe handles which are constructed by coupling a plurality of pipes to have a certain length.

Firstly, they disclose coupling between a larger diameter pipe and a smaller diameter pipe, wherein one end of the smaller diameter pipe fits in one end of the larger diameter pipe.

In this case, however, the smaller diameter pipe may be too thin to withstand a bending stress during use, particularly when the pipe handle is constructed of three or more pipes. The bending stress exerted on such a long object is proportional to the bending moment and is inversely proportional to the modulus of section, but in case where the pipe wall thickness is constant, the modulus of section decreases as the outside/inside diameter decreases. Therefore, the use of the smaller diameter pipe may increase the bending stress due to the bending moment during cleaning, which lowers the bending strength.

Secondly, they disclose that a male coupling (or male side end part) of one pipe diametrically contracts toward a distal end to have two-stage tapered outer surface, a proximal second tapered outer surface having a steeper gradient than a distal first tapered outer surface, and a female coupling (or female side end part) of the other pipe has a tapered inner surface whose gradient is equal to that of the first tapered outer surface so that the two pipes can be coupled together by fitting the tapered inner surface of the female coupling over the first tapered outer surface of the male coupling.

In this case, however, since the pipe has to be circumferentially contracted to produce the first and second tapered outer surfaces, the pipe wall thickness tends to vary in the contracted portion, which makes it difficult to hold dimensions of the first tapered outer surface to close tolerance. If the dimensions of the first tapered outer surface cannot be held to close tolerance, insertion of the male coupling into the female coupling will be difficult due to tightness or the male coupling will wobble within the female coupling due to looseness. In addition, such contracting, which is typically performed by clamping and deforming a pipe end between rolls, requires an expensive processing equipment for holding the dimensions to close tolerance and requires some experience, which also results in high cost.

Moreover, since the first tapered outer surface, which is formed by diametrically contracting the male side end part, has a relatively small diameter, the strength against bending moment decreases as set forth above. Furthermore, the first tapered outer surface formed by diametrically contacting the pipe tends to fatigue due to residual stress. Therefore, if the bending stress concentrates in the connection between the pipes during cleaning, bending or cracking tends to occur in the first tapered outer surface.

Japanese Unexamined Patent Publication No. 2002-005135 further discloses a sleeve which is to be located around the male and female couplings of the two pipes. Coupling between the two pipes can be maintained by fitting an engaging projection, which is formed on an inner surface of the sleeve, into both an engaging hole of the male coupling and an engaging hole of the female coupling.

In order to fit the engaging projection into the engaging holes, the sleeve need to be slid on the pipe after coupling. However, as the sleeve is slid on the pipe, the engaging projection also comes into contact with the pipe to resist sliding. In addition, it is impossible to visually confirm whether the engaging projection has fitted in the engaging holes from the outside.

Further prior art arrangements are known from US 2003/0135955, US 2,142,149, GB 1390154, US 3,476,413 US 2003/0110584 and US 2003/007830.

US 2003/0135955, US 2,142,149 and GB 1390154 disclose arrangements comprising first and second pipes engaged together with a male coupling of the second pipe fitted into a female coupling of the first pipe, wherein the first pipe has a larger inside diameter in the female coupling than in a main body adjacent the female coupling, the second pipe has a continuous outer surface and the main body of the first pipe and a main body of the second pipe have an equal or almost equal outside diameter.

US 3,476,413 discloses a friction type joint having a uniform wall thickness and a tapered portion.

US 2003/0110584 discloses a cleaning device comprising a handle and a head connected to one end of the handle for attachment of a cleaning sheet.

US 2003/007830 discloses an engaging member, for releasably joining two tabular members, that comprises an engaging portion with a single declining slope.

### SUMMARY OF THE INVENTION

The present invention has been developed to solve the problems in the prior art set forth above and has an object to provide a pipe handle which enables high precision coupling with sufficient strength to withstand bending stress during use and a cleaning device using the same.

According to the present invention, there is provided a pipe handle comprising first and second pipes which are engaged together with a male coupling of the second pipe fitted into a female coupling of the first pipe, the first pipe having a larger inside diameter in the female coupling than in a main body adjacent to the female coupling, the second pipe having a continuous outer surface without any step between the male coupling and a main body adjacent to the male coupling, the main body of the first pipe and the main body of the second pipe having an equal or almost equal outside diameter, wherein the male coupling of the second pipe has a tapered outer surface whose outside diameter gradually decreases from a boundary between the main body and the male coupling to a distal end of the male coupling and an angle formed between the tapered outer surface of the male coupling (32) and an outer surface of the main body is equal to or less than 0°50', and the female coupling of the first pipe has a tapered inner surface whose inside diameter gradually increases toward a distal end of the female coupling and an angle formed between the tapered inner surface of the female coupling and an inner surface of the main body is equal to or less than 0°50'.

The main bodies of the first and second pipes constituting the pipe handle according to the present invention may have the same outside/inside diameter. In addition, the female coupling may be formed by diametrically expanding the first pipe, which results in high precision diameter as compared with the case where a male coupling is formed by diametrically contracting a pipe. Moreover, both the male and female couplings may have sufficient strength to withstand bending moment.

The tapered outer surface facilitates insertion of the male coupling into the female coupling. In addition, since the gradient of tapered outer surface is equal to or less than 0°50', the male coupling can be effectively prevented from wobbling due to looseness.

The tapered inner surface of the female coupling further facilitates insertion of the male coupling into the female coupling and prevents the male coupling from wobbling due to looseness.

According to one embodiment of the present invention, the first pipe may have an intermediate part which provides a step between an inner surface of the female coupling and an inner surface of the main body, the intermediate part may have a tapered inner surface whose inside diameter gradually increases from the inner surface of the main body to the inner surface of the female coupling, and an angle formed between the tapered inner surface of the intermediate part and the inner surface of the main body may be larger than an angle formed between the inner surface of the female coupling and the inner surface of the main body. The intermediate part, whose tapered inner surface has a steeper gradient than that of the female coupling, may function as a stopper because the distal end of the male coupling can abut against the inner surface of the intermediate part when the male coupling is inserted into the female coupling.

There may further be provided an engaging member, inside the male coupling of the second pipe, which is adapted to fit in both an engaging hole of the female coupling and an engaging hole of the male coupling, when the engaging holes are aligned with each other, for maintaining coupling between the first and second pipes.

According to the present invention, there is also provided a cleaning device comprising the above mentioned pipe handle and a head connected to one end of the pipe handle for attachment of a cleaning sheet.

### BRIEF DESCRIPTION OF THE DRAWINGS

The present invention will be understood more fully from the detailed description given hereinafter and from the accompanying drawings of the preferred embodiment of the present invention, which, however, should not be taken to limit the invention, but are for explanation and understanding only.

In the drawings:
Fig. 1 is a perspective view of a cleaning device employing a pipe handle according to one embodiment of the present invention;
Fig. 2 is an exploded perspective view showing a connection of the pipe handle according to an embodiment of the invention;
Fig. 3(A) is a sectional view of a female coupling of a first pipe and Fig. 3(B) is a sectional view of a male coupling of a second pipe according to an embodiment of the invention; and
Fig. 4 is a sectional view showing a state where the male coupling fits in the female coupling according to an embodiment of the invention.

### DESCRIPTION OF THE PREFERRED EMBODIMENT

The present invention will be discussed hereinafter in detail in terms of the preferred embodiment according to the present invention with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to avoid unnecessary obscuring of the present invention.

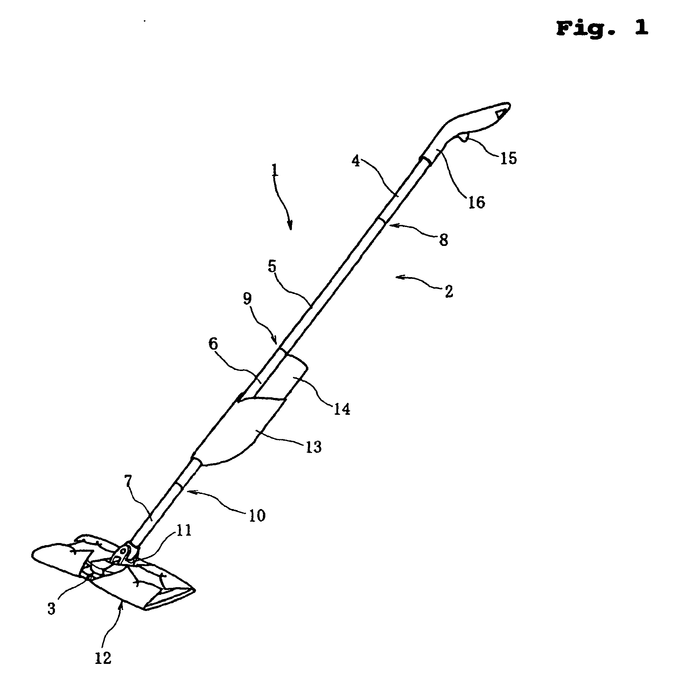

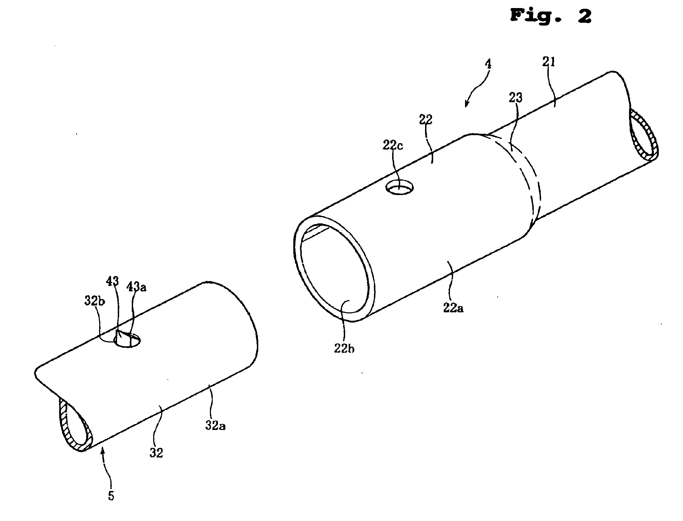

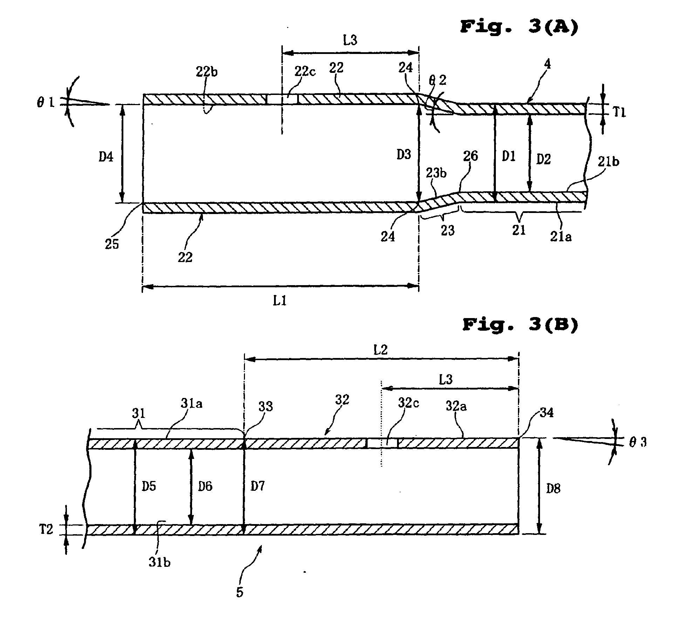

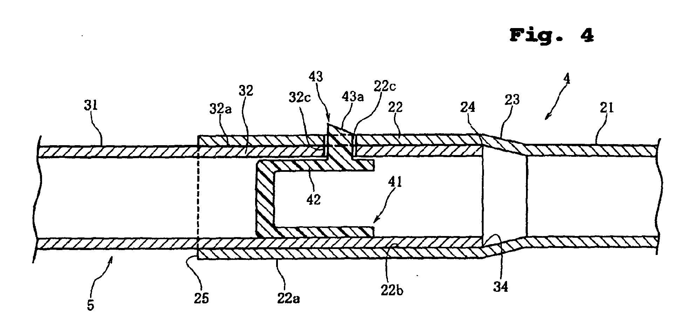

Fig. 1 is a perspective view of a cleaning device employing a pipe handle according to one embodiment of the present invention; Fig. 2 is an exploded perspective view showing a connection of the pipe handle; Fig. 3(A) is a sectional view of a female coupling of a first pipe; Fig. 3(B) is a sectional view of a male coupling of a second pipe; and Fig. 4 is a sectional view showing a state where the male coupling fits in the female coupling.

Fig. 1 shows a cleaning device 1 which is suitable for cleaning the house floor and composed of a pipe handle 2, a head 3 connected to a front end of the pipe handle 2 and a grip 16 attached to a rear end of the pipe handle 2.

The pipe handle 2 may be constructed by coupling four short pipes, i.e., a rear-side end pipe 4, a rear-side intermediate pipe 5, a front-side intermediate pipe 6 and a front-side end pipe 7. In Fig. 1, the rear-side end pipe 4 and the rear-side intermediate pipe 5 are coupled together at a connection 8, the rear-side intermediate pipe 5 and the front-side intermediate pipe 6 are coupled together at a connection 9, and the front-side intermediate pipe 6 and the front-side end pipe 7 are coupled together at a connection 10. The head 3, which is connected to the front end of the long pipe handle 2 constructed by coupling these pipes, can be slid on a floor surface by holding the grip 16. When not in use, the cleaning device 1 may be stored compactly by uncoupling the pipes.

The head 3 may be rectangular in plan configuration and may have a top face which is centrally connected to the front end of the front-side end pipe 7 through a universal joint 11. To the head 3, a cleaning sheet 12 may be attached for cleaning. The cleaning sheet 12 may be a disposable wiper constructed mainly of a nonwoven fabric and capable of absorbing liquid. The cleaning sheet 12 may be laid on a bottom face of the head 3 and partially folded back against the top face of the head 3 and detachably fixed on the top face of the head 3 by fixing means (not shown).

A holder 13 may be fixed on the front-side intermediate pipe 6 with an opening directed upward so that a container 14 filled with liquid can be put in the holder 13. The grip 16 has a push button 15. By pushing the push bottom 15, a valve of the holder 13 may be opened to let the liquid inside the container 14 flow down a tube passing through the front-side intermediate pipe 6 and the front-side end pipe 7 and the liquid may be squirted from a nozzle of the head 3 and applied to the floor surface in front of the head 3.

The grip 16 may be made of a synthetic resin and secured on the rear end of the rear-side end pipe 4.

At the connections 8, 9, 10, two pipes may be coupled in the same manner. Therefore, only the structure of the connection 8 where the rear-side end pipe 4 and the rear-side intermediate pipe 5 are coupled will be described hereinbelow with reference to Figs. 2 to 4. In the embodiment of Figs. 2 to 4, the rear-side end pipe 4 has a female coupling and is called "first pipe" and the rear-side intermediate pipe 5 has a male coupling and is called "second pipe". Alternatively, the rear-side end pipe 4 may have a male coupling and be called "second pipe" and the rear-side intermediate pipe 5 may have a female coupling and be called "first pipe". This relationship is also true in the connections 9 and 10.

The first pipe 4 of Fig. 3(A) and the second pipe 5 of Fig. 3(B) may be cylinders of aluminum or aluminum alloy, whose inner and outer surfaces are both circular in section taken on a plane perpendicular to the pipe axis. Alternatively, the first pipe 4 and the second pipe 5 may be made of copper alloy, brass alloy, stainless steel, etc. These pipes are preferably made of any one of the above-mentioned metals from the viewpoint of strength, although they may also be made of a synthetic resin.

As shown in Fig. 3(A), the first pipe 4 has a main body 21 and a female coupling 22 projecting forward from a front end of the main body 21 to have a length L1. Between the main body 21 and the female coupling 22, there may be provided an intermediate part 23 for forming a step between an inner surface 21b of the main body 21 and an inner surface 22b of the female coupling 22. In the main body 21, an outer surface 21a has an outside diameter D1 and the inner surface 21b has an inside diameter D2. The main body 21 has a wall thickness T1. The outside diameter D1 may be about 10 to 50 mm and the wall thickness T1 may be about 1 to 5 mm.

The female coupling 22 and the intermediate part 23 may be formed by diametrically expanding a pipe material having the same diameter as the main body 21. The female coupling 22 has an inside diameter D3 at a boundary 24 between the female coupling 22 and the intermediate part 23 and an inside diameter D4 at a distal end 25, wherein the inside diameter D4 is slightly larger than the inside diameter D3. An angle θ1 between the inner surface 22b of the female coupling 22 and the inner surface 21b of the main body 21 is equal to or less than 0 degrees 50 minutes in the sectional view of Fig. 3(A). That is, 0° < θ1 ≦ 0°50'.

In the intermediate part 23, the inside diameter gradually increases from a boundary 26 between the intermediate part 23 and the main body 21 to the boundary 24. That is, the intermediate part 23 has a tapered inner surface 23b. An angle θ 2 between the inner surface 23b of the intermediate part 23 and the inner surface 21b of the main body 21 is sufficiently larger than the angle θ 1 and in the range of 10° to less than 90°.

As shown in Fig. 3(B), the second pipe 5 has a main body 31 and a male coupling 32 projecting rearward from a rear end of the main body 31 to have a length L2. The length L2 of the male coupling 32 may be equal to the length L1 of the female coupling 22 or shorter than the length L1 by about 0.5 to 5 mm.

The main body 31 has an outer surface 31a, whose outside diameter D5 is equal to or almost equal to the outside diameter D1 of the main body 21 of the first pipe 4, and an inner surface 31b, whose inside diameter D6 is equal to or almost equal to the inside diameter D2 of the main body 31 of the first pipe 4. The main body 31 has a wall thickness T2, which is equal to or almost equal to the wall thickness T1 of the main body 21 of the first pipe 4. Accordingly, the second pipe 5 may be formed of a pipe material having the same nominal size as that used for the first pipe 4.

The male coupling 32 has an outer surface 32a. The outer surface 32a has an outside diameter D7 at a boundary 33 between the male coupling 32 and the main body 31 and an outside diameter D8 at a distal end 34.

According to an embodiment, the outside diameter D7 at the boundary 33 may be equal to the outside diameter D5 but the outside diameter D8 at the distal end 34 is slightly smaller than the outside diameter D7. This may be achieved by diametrically contacting the pipe material or polishing the outside surface 32a. More specifically, the outside surface 32a of the male coupling 32 is so tapered that the outside diameter gradually decreases toward the distal end 34. An angle θ 3 between the outside surface 31a of the main body 31 and the outside surface 32a of the male coupling 32 is equal to or less than 0°50' in the sectional view of Fig. 3(B). According to the embodiment, therefore, 0° < θ 3 ≦ 0°50'. In the embodiment, there is no step between the outer surface 31a of the main body 31 and the outer surface 32a of the male coupling 32.

When the outer surface 32a of the male coupling 32 is tapered according to the embodiment, the angle θ1 of the female coupling 22 falls within the range between 0° and 0°50'. In this case, however, the angle θ3 of the outer surface 32a of the male coupling 32 is preferably equal to or almost equal to the angle θ 1 of the inner surface 22b of the female coupling 22. Most preferably, the angle θ 1 is equal to the angle θ 3.

By minimizing the angular difference between the outer surface 32a of the male coupling 32 and the inner surface 22b of the female coupling 22 with respect to the pipe axis, as set forth above, the outer surface 32a of the male coupling 32 can fit with minimum clearance against the inner surface 22b of the female coupling 22 to thereby prevent wobbling at the connection 8.

In order that the male coupling 32 will closely fit in the female coupling 22, as set forth above, the outside diameter D8 at the distal end 34 of the male coupling 32 is preferably equal to or slightly smaller than the inside diameter D3 at the boundary 24 of the first pipe 4. Also, the outside diameter D7 at the boundary 33 of the second pipe 5 is preferably equal to or slightly smaller than the inside diameter D4 at the distal end 25 of the female coupling 22.

As shown in Fig. 3(A), the female coupling 22 may have an engaging hole 22c, which is spaced a distance L3 apart from the boundary 24 toward the distal end 25, and the male coupling 32 may have an engaging hole 32c, which is spaced the same distance L3 apart from the distal end 34 toward the boundary 33. The engaging hole 22c and the engaging hole 32c may have the same opening diameter.

Inside the male coupling 32 of the second pipe 5, an engaging member 41 may be provided as shown in Fig. 4. The engaging member 41 may be made of a synthetic resin material or a resiliently deformable metal material and may be integrally formed with an engaging projection 43 on an outer surface of a resiliently deformable part 42. The engaging projection 43 may have a slope 43a declining toward the distal end 34 of the male coupling 32 to have a minimum height equal to or greater than the sum of wall thickness T1 and the wall thickness T2.

When the first pipe 4 and the second pipe 5 are separated from each other, as shown in Fig. 2, the slope 43a of the engaging projection 43, which is fitted in the engaging hole 32c of the male coupling 32 from the inside, projects from the outer surface 32a of the male coupling 32.

When the male coupling 32 of the second pipe 5 is inserted into the female coupling 22 of the first pipe 4, the resiliently deformable part 42 may be deformed toward the inside of the male coupling 32 by contact of the slope 43a of the engaging projection 43 with the distal end 25 of the female coupling 22 so that the engaging projection 43 may slide on the inner surface 22b of the female coupling 22. The extent of insertion of the male coupling 32 may be limited by contact of the distal end 34 of the male coupling 32 with the inner surface 23b of the intermediate part 23 of the first pipe 4 or the boundary 24. After insertion, the resiliently deformable part 42 may recover to the original state when the engaging projection 43 is aligned with the engaging hole 22c of the female coupling 22, so that the engaging projection 43 fits in the engaging hole 22c of the female coupling 22, as shown in Fig. 4. Thus, coupling between the first pipe 4 and the second pipe 5 can be maintained.

It should be noted that the engaging projection 43 may be disengaged from the engaging hole 22c by depressing the engaging projection 43, which projects from the outer surface of the female coupling 22 in the engaging state of Fig. 4. Thus, the first pipe 4 and the second pipe 5 may be separated from each other.

In the connections 8, 9, 10, as has been described hereinabove, the first pipe 4, whose female coupling 22 is formed by diametrically expanding the pipe material, does not have a portion having a smaller diameter than the main body 21 and the second pipe 5, whose outer surface is continuous without any step between the male coupling 32 and the main body 31, has a constant or almost constant diameter. Therefore, the connections 8, 9, 10 are prevented from being subject to excess stress due to bending moment and are increased in strength against the bending moment. Thus, even if the cleaning sheet 12 attached to the head 3 is strongly passed against the floor surface by holding the grip 16 of Fig. 1 in hand, deformation of the pipe handle 2 at the connections 8, 9, 10 can be effectively prevented.

In addition, the outer surface 32a of the male coupling 32 of the second pipe 5 is tapered such that its gradient is extremely slight. Therefore, the size and shape of the outer surface 32a of the male coupling 32 do not vary widely. Furthermore, since the female coupling 22 of the first pipe 4 is formed by diametrically expanding the pipe material, the size and shape of the inner surface 22b do not vary widely. Hence, when the male coupling 32 is inserted into the female coupling 22, as shown in Fig. 4, the outer surface 32a can fit with minimum clearance against the inner surface 22b to thereby prevent wobbling at the connections 8, 9, 10.

The engaging member 41, which is provided inside the male coupling 32, can be easily fitted in the engaging hole 22c of the female coupling 22 only by inserting the male coupling 32 into the female coupling 22 and aligning the engaging hole 22c with the engaging hole 32c. This arrangement also facilitates disengagement of the engaging member 41 from the engaging hole 22c.

The pipe handle 2 may have a constant outside diameter except for the connections 8, 9, 10, which results in improving the appearance and providing an almost uniform strength throughout the length of the pipe handle 2.

Although the present invention has been illustrated and described with respect to exemplary embodiment thereof, it should be understood by those skilled in the art that the foregoing and various other changes, omission and additions may be made therein and thereto, without departing from the scope of the present invention as defined by the claims. For example, the cleaning device may be adapted for cleaning a ceiling or wall. The number of pipes constituting the pipe handle may be two or three or five or more. The section of the pipe may be oval or elliptical, instead of circular.

Therefore, the present invention should not be understood as limited to the specific embodiments set out above but should be understood to include all possible embodiments which can be embodied within the scope of the appended claims.

## Claims

1. A pipe handle comprising first and second pipes (4, 5) which are engaged together with a male coupling (32) of the second pipe (5) fitted into a female coupling (22) of the first pipe (4),
the first pipe (4) having a larger inside diameter in the female coupling (22) than in a main body (21) adjacent to the female coupling (22), the second pipe (5) having a continuous outer surface without any step between the male coupling (32) and a main body (31) adjacent to the male coupling (32), the main body (21) of the first pipe (4) and the main body (31) of the second pipe (5) having an equal or almost equal outside diameter, wherein
the male coupling (32) of the second pipe (5) has a tapered outer surface whose outside diameter gradually decreases from a boundary between the main body (31) and the male coupling (32) to a distal end (34) of the male coupling (32) **characterized in that** angle formed between the tapered outer surface of the male coupling (32) and an outer surface of the main body (31) is equal to or less than 0°50', and
the female coupling (22) of the first pipe (4) has a tapered inner surface whose inside diameter gradually increases toward a distal end (25) of the female coupling (22) and an angle formed between the tapered inner surface of the female coupling (22) and an inner surface of the main body (21) is equal to or less than 0°50'.

2. The pipe handle of Claim 1, wherein the first pipe (4) has an intermediate part (23) which provides a step between an inner surface of the female coupling (22) and an inner surface of the main body (21), the intermediate part (23) has a tapered inner surface whose inside diameter gradually increases from the inner surface of the main body (21) to the inner surface of the female coupling (22), and an angle formed between the tapered inner surface of the intermediate part (23) and the inner surface of the main body (21) is larger than an angle formed between the inner surface of the female coupling (22) and the inner surface of the main body (21).

3. The pipe handle of any preceding claim, wherein an engaging member (41), which is adapted to fit in both an engaging hole (22c) of the female coupling (22) and an engaging hole (32c) of the male coupling (32) for maintaining coupling between the first and second pipes (4, 5), is provided inside the male coupling (32) of the second pipe (5).

4. A cleaning device comprising the pipe handle of any preceding claim and a head (3) connected to one end of the pipe handle for attachment of a cleaning sheet (12).

## Patentansprüche

1. Rohrförmiger Stiel mit einem ersten und einem zweiten Rohr (4, 5), die unter Einstecken eines männlichen Kupplungsstücks (32) des zweiten Rohrs (5) in ein weibliches Kupplungsstück (22) des ersten Rohrs (4) ineinandergreifen,
wobei das erste Rohr (4) in dem weiblichen Kupplungsstück (22) einen größeren Innendurchmesser hat als in einem dem weiblichen Kupplungsstück (22) benachbarten Hauptteil (21), wobei das zweite Rohr (5) zwischen dem männlichen Kupplungsstück (32) und einem diesem benachbarten Hauptteil (31) eine kontinuierliche Außenfläche ohne Stufe aufweist und der Hauptteil- (21) des ersten Rohrs (4) den gleichen oder fast gleichen Außendurchmesser hat wie der Hauptteil (31) des zweiten Rohrs (5) und wobei das männliche Kupplungsstück (32) des zweiten Rohrs (5) eine konische Außenfläche hat, deren Außendurchmesser von einer Grenze zwischen dem Hauptteil (31) und dem männlichen Kupplungsstück (32) zum distalen Ende (34) des männlichen Kupplungsstücks (32) allmählich abnimmt,
**dadurch gekennzeichnet, dass**
zwischen der konischen Außenfläche des männlichen Kupplungsstücks und der Außenfläche des Hauptteils (31) ein Winkel gleich oder kleiner als 0°50' vorhanden ist und
das weibliche Kupplungsstück (22) des ersten Rohrs (4) eine konische Innenfläche aufweist, deren Innendurchmesser zum distalen Ende (25) des weiblichen Kupplungsstücks (22) allmählich zunimmt und zwischen der konischen Innenfläche des weiblichen Kupplungsstücks (22) und einer Innenfläche des Hauptteils (21) ein Winkel gleich oder kleiner als 0°50' vorhanden ist.

2. Rohrförmiger Stiel nach Anspruch 1, wobei das erste Rohr (4) einen Zwischenabschnitt (23) aufweist, der eine Stufe zwischen einer Innenfläche der weiblichen Kupplung (22) und einer Innenfläche des Hauptteils (21) bildet und eine konische Innenfläche aufweist, deren Innendurchmesser von der Innenfläche des Hauptteils (21) zur Innenfläche des weiblichen Kupplungsstücks (22) allmählich zunimmt, wobei zwischen der konischen Innenfläche des Zwischenabschnitts (23) und der Innenfläche des Hauptteils (21) ein Winkel vorhanden ist, der größer ist als ein zwischen der Innenfläche des weiblichen Kupplungsstücks (22) und der Innenfläche des Hauptteils (21) vorhandener Winkel.

3. Rohrförmiger Stiel nach einem der vorhergehenden Ansprüche, wobei in dem männlichen Kupplungsstück (32) des zweiten Rohrs (5) ein Eingriffsteil (41) vorgesehen ist, das so ausgelegt ist, dass es sowohl in ein Eingriffsloch (22c) des weiblichen Kupplungsstücks (22) als auch in ein Eingriffsloch (32c) des männlichen Kupplungsstücks (32) passt, um die Kupplung zwischen dem ersten und dem zweiten Rohr (4, 5) aufrechtzuerhalten.

4. Reinigungsgerät mit dem rohrförmigen Stiel nach einem der vorhergehenden Ansprüche und einem mit dessen einem Ende verbundenen Kopf (3) zur Befestigung eines Reinigungstuchs (12).

## Revendications

1. Manche tubulaire comprenant un premier et un deuxième tubes (4, 5) qui sont emmanchés ensemble au moyen d'un accouplement mâle (32) du deuxième tube (5) ajusté dans un accouplement femelle (22) du premier tube (4),
le diamètre interne du premier tube (4) étant plus grand dans l'accouplement femelle (22) que dans le corps principal (21) adjacent à l'accouplement femelle (22), la surface externe du deuxième tube (5) étant continue sans aucun gradin entre l'accouplement mâle (32) et le corps principal (31) adjacent à l'accouplement mâle (32), les diamètres externes du corps principal (21) du premier tube (4) et du corps principal (31) du deuxième tube (5) étant égaux ou presque égaux, dans lequel
l'accouplement mâle (32) du deuxième tube (5) comporte une surface externe tronconique dont le diamètre externe diminue graduellement depuis la limite entre le corps principal (31) et l'accouplement mâle (32) jusqu'à l'extrémité distale (34) de l'accouplement mâle (32), **caractérisé en ce que** l'angle formé entre la surface externe tronconique de l'accouplement mâle (32) et la surface externe du corps principal (31) est égal ou inférieur à 0°50', et
l'accouplement femelle (22) du premier tube (4) comporte une surface interne tronconique dont le diamètre interne augmente graduellement en direction de l'extrémité distale (25) de l'accouplement femelle (22), et l'angle formé entre la surface interne tronconique de l'accouplement femelle (22) et la surface interne du corps principal (21) est égal ou inférieur à 0°50'.

2. Manche tubulaire selon la revendication 1, dans lequel le premier tube (4) comprend une partie intermédiaire (23) qui forme un gradin entre la surface interne de l'accouplement femelle (22) et la surface interne du corps principal (21), la partie intermédiaire (23) comportant une surface interne tronconique dont le diamètre interne augmente graduellement depuis la surface interne du corps principal (21) vers la surface interne de l'accouplement femelle (22), et l'angle formé entre la surface interne tronconique de la partie intermédiaire (23) et la surface interne du corps principal (21) est supérieur à l'angle formé entre la surface interne de l'accouplement femelle (22) et la surface interne du corps principal (21).

3. Manche tubulaire selon la revendication 1 ou 2, dans lequel un élément d'encliquetage (41), qui est apte à s'ajuster tant dans un orifice d'encliquetage (22c) de l'accouplement femelle (22) que dans un orifice d'encliquetage (32c) de l'accouplement mâle (32) pour maintenir l'accouplement entre le premier et le deuxième tubes (4,5) est agencé à l'intérieur de l'accouplement mâle (32) du deuxième tube (5).

4. Dispositif de nettoyage comprenant un manche tubulaire conforme à l'une quelconque des revendications précédentes et une tête (3) connectée à l'une des extrémités dudit manche tubulaire pour attacher une feuille de nettoyage (12).
